Europäisches Patentamt

European Patent Office

Office européen des brevets

(19)

(11) **EP 0 998 537 B1**

(12) **FASCICULE DE BREVET EUROPEEN**

(45) Date de publication et mention
de la délivrance du brevet:
**29.09.2004 Bulletin 2004/40**

(51) Int Cl.⁷: $C09J\ 201/00$, C09J 179/08,
C09J 5/06, C08K 5/00

(21) Numéro de dépôt: **98941460.2**

(22) Date de dépôt: **27.07.1998**

(86) Numéro de dépôt international:
**PCT/FR1998/001657**

(87) Numéro de publication internationale:
**WO 1999/006499 (11.02.1999 Gazette 1999/06)**

(54) **COMPOSITION ADHESIVE POUR LE COLLAGE A CHAUD ET PROCEDE DE COLLAGE PERMETTANT SA MISE EN OEUVRE**

KLEBSTOFFZUSAMMENSETZUNG FÜR HEISSKLEBEN UND KLEBEVERFAHREN ZUR DURCHFÜHRUNG DESSELBEN

ADHESIVE COMPOSITION FOR HOT BONDING AND BONDING METHOD USING SAME

(84) Etats contractants désignés:
**CH DE GB IT LI NL SE**

(30) Priorité: **29.07.1997 FR 9709637**

(43) Date de publication de la demande:
**10.05.2000 Bulletin 2000/19**

(73) Titulaire: **EUROCOPTER
13725 Marignane Cédex (FR)**

(72) Inventeurs:
• **MAGNIN, Georges
F-13012 Marseille (FR)**

• **BERTHIER, Jean-Marc
F-13410 Lambesc (FR)**
• **SIBOIS, Hélène
F-13170 Les Pennes Mirabeau (FR)**

(74) Mandataire: **Renaud-Goud, Thierry et al
GPI & Associés
EuroParc de Pichaury
Bât D1-1 étage
1330, rue Guillibert de la Lauzière
13856 Aix-en-Provence Cédex 3 (FR)**

(56) Documents cités:
**US-A- 5 300 812**

**Description**

La présente invention porte sur une composition adhésive pour le collage à chaud de substrats ainsi que sur un procédé permettant sa mise en oeuvre.

La composition adhésive selon l'invention permet de coller des substrats, en particulier des substrats composites à matrice polymère ou des substrats métalliques par exemple en alliage d'aluminium, sans en limiter les caractéristiques. Elle trouve des applications tout à fait avantageuses pour la réalisation de stratifiés et de structures sandwich de qualité aéronautique à âme en mousse ou en nid d'abeille et à revêtement en matériau polymère renforcé, utilisables dans les pales de rotor, ou dans des pièces mécaniques du moyeu rotor, notamment d'hélicoptères et également utilisables pour l'aménagement intérieur d'aéronefs, de transports publics, etc. De telles structures présentent des performances tout à fait intéressantes en termes de coût, masse, caractéristiques physiques et mécaniques.

Par ailleurs, la composition adhésive selon l'invention peut être mise en oeuvre à des températures inférieures aux températures classiquement utilisées pour le collage de matériaux polymères renforcés, entraînant ainsi une diminution des coûts de fabrication. Cette composition permet en outre de coller des substrats de différentes natures, souvent incompatibles.

Actuellement, en aéronautique, on emploie largement des structures sandwich en raison de leur bon compromis performances / gain de masse. Leur développement est cependant limité par leurs performances en température difficiles à améliorer sans augmenter la masse des structures.

En effet, pour des raisons de connaissances techniques, les structures sandwich sont constituées, en revêtement, de matériaux composites à matrice thermodurcissable époxyde éventuellement autoadhésive et, pour l'âme, de nid d'abeille de type à feuilles de polyamide aromatique tel que le polyaramide commercialisé sous la marque NO-MEX® ou feuilles métalliques assemblées par des résines phénoliques ou polyimides. Il serait tout à fait intéressant de remplacer les matrices époxydes éventuellement autoadhésives par d'autres matrices époxydes modifiés, bismaléimides (BMI) ou thermoplastiques telles que des résines polyétheréthercétone(PEEK) ou polyétherimide (PEI). En effet, ceci permettrait d'augmenter les durées de vie à des températures de service supérieures ainsi que certaines performances, notamment la tolérance aux dommages et la résistance au feu. Toutefois, cette modification nécessite, pour obtenir une bonne adhésion sur l'âme en nid d'abeille:

- un apport de colle non négligeable,
- un adhésif approprié au revêtement,
- l'utilisation d'un autre nid d'abeille dont les températures limites seraient compatibles avec celles des collages,

ce qui entraînerait une augmentation importante du coût et/ou de la masse.

Par ailleurs, il est également intéressant de pouvoir réaliser des matériaux constitués par l'assemblage de substrats à matrice thermodurcissable ou thermoplastique.

Actuellement, les composites à matrice thermoplastique peuvent être assemblés:

- par collage classique avec un adhésif thermodurcissable,
- ou par fusion locale de la matrice, ce qui permet la soudure des deux substrats.

Cependant, ces deux procédés présentent deux types de limitations. D'une part, en ce qui concerne les résistances mécaniques influencées directement par la compatibilité des matrices des substrats et des films de colle et par le traitement de surface. Par exemple, la réalisation de structures sandwich à âme en nid d'abeille de type aramide/phénol et à revêtement à matrice bismaléimide (BMI) n'est pas possible avec ces procédés en raison de l'incompatibilité chimique du BMI avec les matériaux d'âme. Et d'autre part, la température à atteindre pour assurer la co-consolidation des interfaces est difficile à maîtriser et peut entraîner des déformations dans les zones voisines. Ainsi, il est difficile de réaliser des structures sandwich à revêtement en polyétheréthercétone (PEEK) et à âme en nid d'abeille aramide/phénol étant donné que la température de fusion du PEEK est de 400°C, température à laquelle les nids d'abeille ne peuvent pas résister.

Afin de minimiser ces inconvénients, un procédé également dit Thermabond est mis en oeuvre. Ce procédé est à la fois un collage, car on rajoute un film de résine, et une co-consolidation car on porte ce film à sa température de fusion. Par exemple, si l'on veut assembler un substrat à matrice PEEK avec un substrat à matrice PEI, on interpose un film de PEI et l'on chauffe l'ensemble à une température de l'ordre de 300°C assurant la fusion du PEI. Cette température élevée n'est pas appropriée à la réalisation de tous les substrats que l'on souhaiterait utiliser. En particulier, elle n'est pas appropriée à la réalisation de structures sandwich à âme en nid d'abeille de type aramide/phénol.

Il existe donc un besoin important de composition adhésive appropriée à la fabrication de matériaux stratifiés qui ne limite pas les performances d'utilisation des matériaux stratifiés résultants et qui soit mise en oeuvre à une température non rédhibitoire économiquement et suffisamment faible pour ne pas détériorer les substrats à coller.

Les inventeurs ont eu le mérite de trouver une composition adhésive pour le collage à chaud de substrats comprenant:

- au moins un matériau polymère présentant un point de fusion;
- au moins un agent plastifiant et mouillant qui est un composé aromatique porteur d'au moins un groupe fonctionnel choisi dans le groupe constitué par la propiophénone, la benzophénone, la diphénylsulfone, la ditolylsulfone, le benzoate de phényle, le benzoate de benzyle et le benzophénol;
- et éventuellement au moins un solvant,

caractérisée par le fait que ledit matériau polymère est choisi dans le groupe constitué par les polyétherimides (PEI), les polyéthersulfones, les polysulfones, les sulfures de polyphénylène, les oxydes de polyarylène, les polyamides aromatiques, les polyesters aromatiques, les polycarbonates aromatiques et les polyétheréthercétones (PEEK)".

De préférence, la température de mise en oeuvre de la composition adhésive selon l'invention est inférieure à la température de déformation des substrats et inférieure à la température de fusion du matériau polymère.

Ainsi, l'utilisation de la composition de l'invention permet d'obtenir des assemblages de substrats qui n'ont pas perdu de caractéristiques mécaniques lors de leur assemblage et pour lesquels la composition adhésive ne constitue pas un facteur limitatif des utilisations possibles.

Cette température de mise en oeuvre est bien entendu fonction de la nature des substrats à coller et du matériau polymère de la composition adhésive. Elle est comprise entre 50 et 250°C, de préférence entre 70 et 240°C et plus préférentiellement encore entre 100 et 200°C.

Le matériau polymère de cette composition adhésive comporte au moins un polymère ou copolymère ayant des motifs répétitifs identiques ou différents de formule générale

$$-Ar-X-$$

dans laquelle :

- Ar représente un radical aromatique mono- ou polycyclique, substitué ou non substitué
- et X représente un atome d'azote, d'oxygène ou de soufre ou une fonction OCO, O-CO-O, CO, NHCO, N(CO$_2$), SO$_2$, O-SO$_2$, N(SO$_2$), C=NH ou un groupe alkyle saturé ou insaturé porteur d'un atome d'azote, d'oxygène ou de soufre ou d'une fonction OCO, O-CO-O, CO, NHCO, N(CO$_2$), SO$_2$, O-SO$_2$, N(SO$_2$), C=NH.

Ce polymère est choisi en fonction de la nature des substrats à assembler. Il est préférable que ce polymère ait une structure chimique voisine de celle du substrat lorsque ce dernier est un substrat polymère.

A titre d'exemple de matériau polymère utilisable dans la composition selon l'invention, on peut citer les polyétherimides (PEI), les polyéthersulfones, les polysulfones, les sulfures de polyphénylène, les oxydes de polyarylène, les polyamides aromatiques, les polyamideimides, les polyesters aromatiques, les polycarbonates aromatiques, les polyétheréthercétones (PEEK).

De préférence ce matériau polymère est un polyétherimide (PEI).

L'agent plastifiant et mouillant est un composé aromatique porteur d'au moins un groupe fonctionnel choisi parmi la propiophénone, la benzophénone, la diphénylsulfone, la ditolylsulfone, le benzoate de phényle ou le benzoate de benzyle et le benzophénol.

Par agent plastifiant et mouillant, on entend tout matériau capable d'abaisser la température de fusion d'un polymère, sa température de transition vitreuse et sa viscosité et de faciliter la mouillabilité, par transformation réversible du polymère. Cet agent plastifiant et mouillant présente un point d'ébullition ou de fusion comparable à celui du matériau polymère de la composition adhésive.

Cet agent plastifiant peut être volatil à la température de mise en oeuvre de la composition adhésive ou bien peut ne pas être volatil à cette température, auquel cas il doit bien entendu être choisi de façon à ne pas affecter de façon défavorable les caractéristiques de l'assemblage formé dans lequel il subsiste.

Le solvant éventuel est choisi parmi les solvants chlorés tels que le dichlorométhane et les solvants aminés tels que la N-méthylpyrrolidone.

Dans la présente invention le terme solvant et le terme diluant sont utilisés indifféremment. En effet, ledit solvant est utilisé pour mettre en solution le matériau polymère de la composition adhésive. Il peut parfois être nécessaire de diminuer la viscosité de cette composition, notamment pour faciliter son application sur l'un au moins des substrats à coller, par exemple par vaporisation au pistolet. Dans ce cas on utilise un diluant qui, de préférence est un excès du solvant de la composition.

Selon un mode préférentiel de l'invention, la composition comprend :

- de 1 à 90%, de préférence de 1 à 40% et plus préférentiellement encore de 5 à 20% en poids de matériau polymère,
- de 1 à 40%, de préférence de 1 à 10% et plus préférentiellement encore de 2 à 4% en poids d'agent plastifiant et mouillant,
- de 0 à 98%, de préférence de 10 à 85%, et plus préférentiellement encore de 30 à 80% en poids de solvant,

les pourcentages étant calculés par rapport au poids total de la composition.

Bien entendu, selon la quantité de solvant utilisé, ladite composition présente une viscosité différente allant de la forme liquide à la forme solide. Elle se présente sous forme de solution, dispersion, suspension, film ou pâte. En particulier lorsque la composition ne comprend pas de solvant, elle se trouve sous la forme d'un film.

Selon un mode de réalisation tout à fait préférentiel, la composition adhésive de l'invention comprend :

- de 10 à 20% en poids de polyétherimide,
- de 2 à 5% en poids d'agent plastifiant,
- de 86 à 77% en poids de solvant.

Les inventeurs ont eu également le mérite de trouver que la composition selon l'invention pouvait être mise en oeuvre à l'aide d'un procédé simple et facile à exploiter industriellement.

Le procédé selon l'invention est un procédé de collage à chaud des substrats suivant lequel :

- on applique sur au moins une surface de l'un au moins des substrats à coller une couche de composition adhésive,
- éventuellement, on applique sur au moins une couche de composition adhésive une couche de colle,
- on met en contact les surfaces des substrats à coller,
- on chauffe l'ensemble, éventuellement sous pression, à une température inférieure à la température de dégradation des substrats et inférieure à la température de fusion du matériau polymère de ladite composition adhésive,
- éventuellement, on refroidit.

De préférence, la température du chauffage est inférieure à la température de déformation des substrats et inférieure à la température de fusion du matériau polymère de la composition adhésive.

Cette température est bien entendu fonction des substrats à coller et du matériau polymère de la composition adhésive. Elle est généralement comprise entre 50 et 250°C, de préférence entre 70 et 240°C et plus préférentiellement encore entre 100 et 200°C.

Cette étape de chauffage peut être conduite en totalité ou en partie sous pression. Ou bien, une pression peut être exercée sur cet ensemble avant ou après l'étape de chauffage. Cette pression est comprise entre 0,07 et 0,30 MPa, de préférence entre 0,10 et 0,3 MPa, et plus préférentiellement encore entre 0,15 et 0,2 MPa.

Selon un mode de réalisation particulier du procédé de l'invention, on applique sur au moins une couche de composition adhésive, une couche de colle. Cette colle peut être une colle classiquement utilisée, de type colle époxyde. La composition adhésive permet alors d'améliorer la répartition de la colle sur toute la surface du substrat à coller.

Le procédé de l'invention peut comprendre une étape de séchage au moins partiel de la couche adhésive immédiatement après son application. Ainsi, on peut sécher au moins partiellement à une température comprise entre 60 et 120°C, la couche de composition adhésive.

La composition adhésive et le procédé de collage permettant sa mise en oeuvre sont tout à fait appropriés au collage des substrats métalliques, tels qu'un substrat en alliage d'aluminium, des substrats polymères thermoplastiques ou thermodurcissables, éventuellement renforcés par des charges ou des fibres minérales ou organiques, et de structure de type compact, mousse ou alvéolaire, ou des stratifiés comportant une ou plusieurs couches de matériaux métalliques, polymères thermoplastiques ou thermodurcissables, éventuellement renforcés par des charges ou des fibres minérales ou organiques, de structure de type compact, revêtement monolithique, alvéolaire ou nid d'abeille.

Comme substrats métalliques, on peut citer à titre d'exemples l'aluminium ou ses alliages, l'acier inoxydable, les nids d'abeilles à âme métallique, ces substrats étant traités anti-corrosion.

Avantageusement, les substrats polymères sont des polymères ou copolymères éventuellement renforcés, ayant des motifs répétitifs identiques ou différents de formule générale:

$$-Ar-X-$$

dans laquelle:

- Ar représente un radical aromatique mono ou polycyclique, substitué ou non substitué ;
- et X représente un atome d'azote, d'oxygène ou de soufre ou une fonction OCO, O-CO-O, CO, NHCO, $N(CO_2)$,

SO$_2$, O-SO$_2$, N(SO$_2$), C=NH ou un groupe alkyle saturé ou insaturé porteur d'un atome d'azote, d'oxygène ou de soufre ou d'une fonction OCO, O-CO-O, CO, NHCO, N(CO$_2$), SO$_2$, O-SO$_2$, N(SO$_2$), C=NH.

A titre d'exemples de ces matériaux polymères, on peut citer les résines thermodurcissables, éventuellement renforcées, à base d'époxydes modifiés ou non modifiés, de bismaléimides, de cyanate-esters, les résines thermoplastiques, éventuellement renforcées, à base de polysulfone, de sulfure de polyphénylène, de polyétheréthercétone, de polyéthersulfone, d'oxyde de polyarylènes, les sulfures de polyarylènes, les polyamides aromatique, de polyester aromatique, de polycarbonate aromatique, de polyétherimide et les composites de type résine phénolique ou polyamide renforcée par de l'aramide ou du verre ou du carbone, les tissus formés à partir de fibres de verre ou de carbone, notamment imprégnés de résine thermoplastique ou à partir de fibres Schappe.

Bien entendu, le procédé de l'invention peut comporter une étape de nettoyage et de séchage des substrats avant l'application de la composition adhésive.

Le mode d'application de la composition adhésive est bien entendu fonction de la forme et de la viscosité de la composition adhésive. Cette application peut se faire par pulvérisation, trempage, application au pinceau lorsque la composition est liquide ou par dépôt de la composition lorsque celle-ci est sous forme de film ou de pâte. Le procédé selon l'invention est tout à fait approprié à la réalisation de structures sandwich à âme en nid d'abeille du type à feuilles d'aramide ou métalliques et à liants phénoliques ou polyimides et à revêtement à matrice polyétheréthercétone revêtu de polyétherimide, caractérisé par le fait que :

- l'on applique sur les surfaces à coller du nid d'abeille et sur la surface du polyétherimide recouvrant le revêtement de polyétheréthercétone, une couche de composition adhésive telle que définie ci-dessus dans laquelle le matériau polymère est du polyétherimide,
- l'on met en contact les surfaces revêtues de composition adhésive,
- l'on chauffe l'ensemble à une température comprise entre 70 et 240°C,
- l'on refroidit à la température ambiante l'assemblage ainsi obtenu.

L'invention est illustrée par les figures 1 à 5 suivantes dans lesquelles :

- la figure 1 représente en section transversale une structure sandwich à âme en nid d'abeille réalisée par mise en oeuvre du procédé selon l'invention,
- la figure 2 représente en section transversale une autre structure sandwich à âme en nid d'abeille réalisée par mise en oeuvre d'un autre mode de réalisation du procédé selon l'invention,
- la figure 3 représente en section transversale une structure sandwich à âme en mousse de polyétherimide réalisée par mise en oeuvre du procédé conforme à l'invention,
- la figure 4 représente en section transversale une structure monolithique réalisée par mise en oeuvre du procédé conforme à l'invention,
- la figure 5 est un graphique représentant pour quatre compositions adhésives selon l'invention et pour le polyétherimide seul, la température de mise en oeuvre en fonction de la viscosité de la composition.

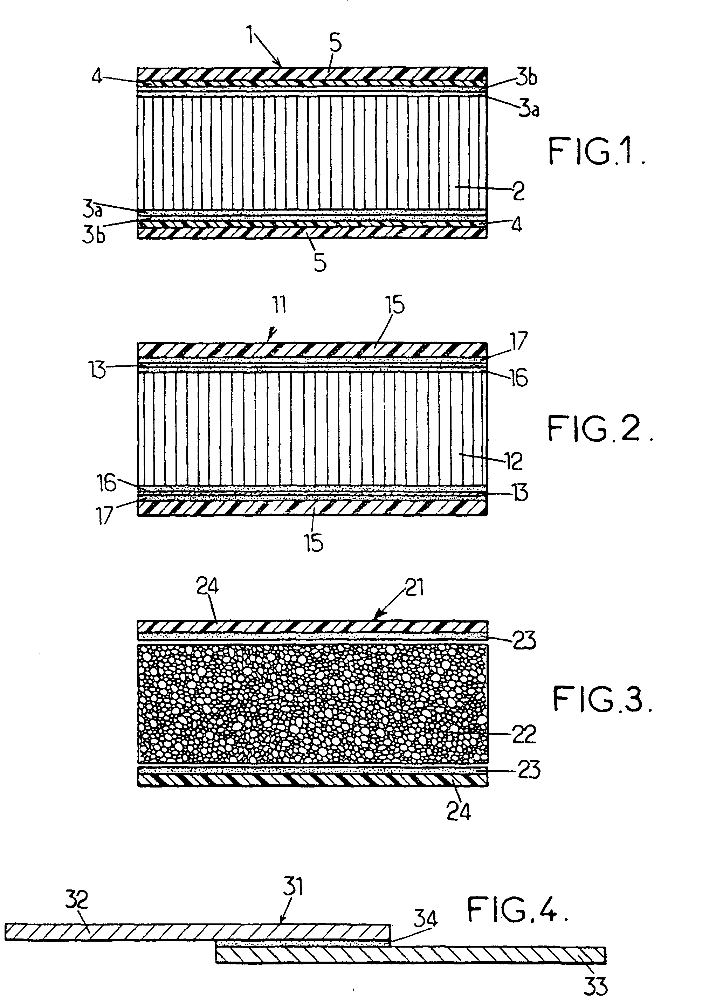

La figure 1 représente une structure sandwich 1 à âme 2 en nid d'abeille à feuilles en NOMEX® et à liant phénolique. Sur chacune des surfaces de ce nid d'abeille 2 est déposée une couche de composition adhésive 3a selon l'invention. Sur chacune de ces couches de composition adhésive vient en contact une autre couche 3b de cette composition, recouvrant une couche de polyétherimide 4, elle-même fixée à une couche 5 de matrice polyétherétercétone renforcée par des fibres de carbone, et constituant une peau ou un revêtement.

On peut également envisager d'utiliser comme couche 5 de polyétheréthercétone un tissu de fils imprégnés de résine polyétheréthercétone ou un tissu de fibres Schappe, auquel cas, il est nécessaire d'interposer entre la couche 5 et la couche 4 de polyétherimide un voile de verre de façon à ce que la couche 4 de polyétherimide soit d'épaisseur sensiblement constante. Ce type de substrat formant la couche 5 présente l'avantage d'être facilement drapable, déformable et s'adapte donc aux formes évolutives et/ou complexes.

La figure 2 représente une autre structure sandwich 11 à âme 12 en nid d'abeille du type à feuilles en aramide NOMEX® et à liant phénolique. Sur chaque face de ce nid d'abeille est déposée une couche 16 de composition adhésive selon l'invention. Sur chacune de ces couches 16 de composition adhésive est déposée une couche 13 de colle. Sur chacune de ces couches 13 de colle vient en contact une couche 17 de composition adhésive sur un revêtement 15 à matrice bismaléimide. La couche 13 de colle est facultative tout comme la couche 17 de composition adhésive qui peut être prévue même en l'absence de couche de colle 13.

La composition adhésive utilisée pour la réalisation des structures des figures 1 et 2, comme celles des figures 3 et 4 décrites ci-dessous, comporte du polyétherimide en tant que matériau polymère.

La figure 3 représente une structure sandwich 21 à âme 22 en mousse de polyétherimide et à revêtements 24 à matrice également polyétherimide. Sur chaque revêtement 24 à matrice polyétherimide est déposée une couche 23 de composition adhésive selon l'invention pour la liaison à l'âme 22.

La composition adhésive selon l'invention permet dans ce cas le collage des revêtements à matrice polyétherimide sans écrasement de la mousse.

En effet, la température de mise en oeuvre de la composition adhésive selon l'invention est inférieure à la température de mise en oeuvre du polyétherimide seul. Si le polyétherimide avait été appliqué seul, la mousse aurait subi un écrasement car elle ne supporte pas la température de mise en oeuvre du polyétherimide seul qui est de l'ordre de 300°C.

L'intérêt de la composition adhésive selon l'invention est donc d'augmenter le champ d'application de ces structures sandwich par l'utilisation de revêtement ou couches externes à haut niveau de performances (tenue en température, résistance) sans influer sur la masse initiale.

La figure 4 représente une structure monolithique 31 comprenant un substrat 32 et un substrat 33 en partie superposés. Entre ces deux substrats, sur leur partie en superposition, est disposée une couche 34 de composition adhésive selon l'invention.

Dans ce type de structure, le substrat 32 et le substrat 33 peuvent être de même nature ou de nature différente. Ces substrats peuvent être, par exemple :

- en composite à matrice polyétheréthercétone revêtu en surface par un film de polyétherimide,
- en composite à matrice polyétherimide,
- en composite à matrice thermodurcissable de type époxyde ou bismaléimide, ou
- en alliage d'aluminium.

Pour assembler de façon définitive les structures représentées sur les figures 1 à 4 décrites ci-dessus on applique pendant quelques minutes une pression d'environ 0,1 à 0,3MPa, et simultanément, on chauffe les structures, le cycle de montée en température étant d'une durée à peu près identique à celui de la mise sous pression. La mise sous pression peut se faire à l'aide d'une presse ou bien à l'aide d'un autoclave.

La présente invention est davantage illustrée par les exemples non limitatifs suivants :

**Exemple 1 :**

On prépare des compositions adhésives conformes à l'invention par mélange à la température ambiante de :

- polyétherimide,
- benzophénone,
- dichlorométhane,

dans les proportions indiquées dans le tableau 1 ci-dessous. Ces proportions sont en pourcentage en poids par rapport au poids total de la composition.

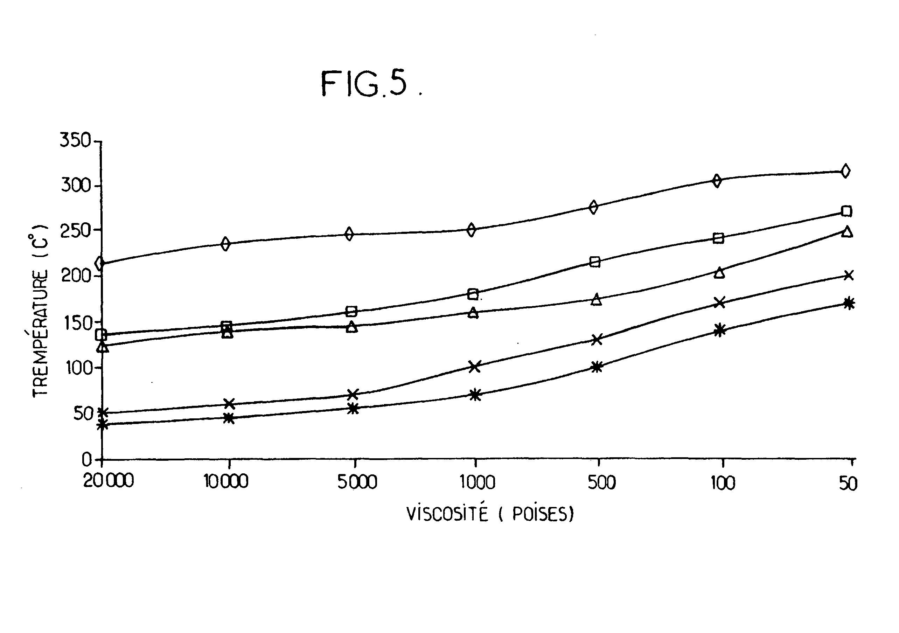

Pour chacune de ces compositions, on a mesuré à l'aide d'un appareil de type viscoélasticimètre la viscosité des agents réactifs après évaporation du solvant en fonction de la température et on a tracé les courbes obtenues qui sont représentées sur la figure 5.

A titre de comparaison, on a tracé la courbe (Référence) de la température en fonction de la viscosité du polyétherimide seul. Cette courbe est également représentée sur la figure 5.

Tableau 1

|  | Composition 1 | Composition 2 | Composition 3 | Composition 4 | Référence |
|---|---|---|---|---|---|
| polyétherimide | 18 | 16 | 14 | 12 | 20 |
| Agent plastifiant | 2 | 4 | 6 | 8 | 0 |
| Solvant | 80 | 80 | 80 | 80 | 80 |
| Symbole utilisé pour la courbe de la figure 5 | ■ | ▲ | × | * | ♦ |

La température de mise en oeuvre des compositions selon l'invention est donc toujours inférieure à la température de mise en oeuvre du polyétherimide seul.

Exemple 2 : Préparation d'une structure sandwich à âme en nid d'abeille aramide/phénolique.

a) Préparation de la composition adhésive :

Dans 200 g de dichlorométhane on a dissous 25 ± 1 g de polyéthimide de grade 1000 commercialisé par la Société General Electric et 5,5 ± 0,25 g de benzophénone.

b) Traitement du nid d'abeille :

Le nid d'abeille du type à feuilles d'aramide NO-MEX® et à liant phénolique est séché en étuve pendant 1h30 à 180°C.
A l'aide d'un pistolet à buse de 2,5 mm, on applique la composition adhésive préparée en a) ci-dessus.
La quantité de composition adhésive est de 140 g/m$^2$ ± 15 (quantité séchée, c'est-à-dire lorsque le dichlorométhane est totalement évaporé).

c) Traitement des revêtements :

Les revêtements à coller sur l'âme sont des revêtements à matrice en polyétheréthercétone renforcée par du carbone, recouverts d'une peau de polyétherimide.

Etape préalable d'assemblage de la peau de polyétherimide:

La peau de polyétherimide est appliquée par compactage sur le revêtement. Pour ce faire, l'ensemble revêtement/couche de polyétherimide est placé entre deux films démoulants de type KAPTON® préalablement passés au démoulant Freekote 44 NC qui est séché 15 minutes à 150°C.
Le compactage est alors réalisé en autoclave ou sous presse.
S'il est réalisé en autoclave, l'ensemble revêtement/couche de polyétherimide placé entre les deux films démoulants est disposé entre deux tôle et inséré dans une poche à vide placée dans l'autoclave. Dans l'autoclave la température est de 390°C ± 5°C et on a une dépression de 0,08MPa et une pression de 0,2 MPa.
S'il est réalisé sous presse, l'ensemble revêtement/couche de polyétherimide placé entre les deux films démoulants est disposé entre les deux plateaux d'une presse et est soumis pendant 35mn ± 5mn à une température de 390°C ± 5°C et à une pression de 0,2MPa.

Préparation de la peau de polyétherimide ainsi fixée au revêtement:

La peau de polyétherimide est dégraissée par de l'alcool isopropylique ou de l'essence G.
A l'aide d'un pistolet à buse de 2,5mm, on applique la composition adhésive préparée en a) ci-dessus sur cette peau dégraissée.
La quantité de composition adhésive est de 35 g/m$^2$ ± 5 (quantité séchée, c'est-à-dire lorsque le dichlorométhane est totalement évaporé).

d) collage de revêtements :

Les revêtements sont appliqués sur l'âme en nid d'abeille, les faces recouvertes de composition adhésive étant en contact entre elles.
Cet ensemble est porté à une température de 225 ± 5°C sous 0,2 MPa pendant 20 minutes.
On obtient alors une structure sandwich telle que représentée sur la figure 1.
Les couples de pelage de cette structure ont été mesurées à l'aide d'une machine d'essais de type INSTROM. Ces couples de pelage étaient supérieurs à 50mm N/mm.

**Exemple 3 :**

On recommence l'exemple 1, excepté que l'étape d) de collage est conduite dans un autoclave à une température de 225°C sous 0,08 MPa de dépression et 0,2 MPa de pression, pendant une durée d'environ 30mn.

**Exemple 4 :**

Une composition adhésive selon l'invention a été préparée par mélange à la température ambiante de :

- 25 g de polyétherimide,
- 10 g de benzophénone comme agent plastifiant et mouillant,
- 200 g de dichlorométhane comme solvant.

Cette composition a été appliquée au pistolet sur un nid d'abeille NOMEX® à raison de 140 g/m$^2$.

Des coupes micrographiques des alvéoles de nid d'abeille montrent un ménisque de composition adhésive ainsi qu'un angle de contact nid d'abeille/composition adhésive positif, traduisant une bonne mouillabilité de la composition adhésive.

Les tensions superficielles du nid d'abeille NO-MEX® et de la composition adhésive ont été mesurées à la balance de Cahn et ont donné des valeurs :

$$V(nida) = 37,6 \times 10^{-3} \text{ N/m}$$

et

$$V(primaire) = 31,09 \times 10^{-3} \text{ N/m}.$$

Cette méthode consiste à mesurer la force F qu'il faut exercer verticalement à une lame de verre ou sur un matériau pour équilibrer les forces d'attraction superficielles.

Lorsque la lame de verre est amenée en contact avec la surface du liquide, celui-ci tend à mouiller la surface de la lame. La balance de Cahn mesure la force d'arrachement nécessaire à sortir l'éprouvette du liquide à analyser.

Pour que le solide mouille favorablement le liquide, il est nécessaire que la tension de ce dernier soit inférieure à la tension du premier. Alors, le liquide pourra s'écouler le long des parois et former un angle de raccordement faible.

La mouillabilité de la composition adhésive pour des composites à matrice époxyde à haute température ainsi que pour des résines de polyamide est également satisfaisante.

**Revendications**

1. Composition adhésive pour le collage à chaud de substrats comprenant:

   - au moins un matériau polymère présentant un point de fusion;
   - au moins un agent plastifiant et mouillant qui est un composé aromatique porteur d'au moins un groupe fonctionnel choisi dans le groupe constitué par la propiophénone, la benzophénone, la diphénylsulfone, la ditolylsulfone, le benzoate de phényle, le benzoate de benzyle et le benzophénol;
   - et éventuellement au moins un solvant,

   **caractérisée par le fait que** ledit matériau polymère est choisi dans le groupe constitué par les polyétherimides (PEI), les polyéthersulfones, les polysulfones, les sulfures de polyphénylène, les oxydes de polyarylène, les polyamides aromatiques, les polyesters aromatiques, les polycarbonates aromatiques et les polyétheréthercétones (PEEK)"

2. Composition selon la revendication 1 **caractérisée par le fait que** le solvant est choisi parmi les solvants chlorés tels que le dichlorométhane et les solvants aminés tels que la N-méthylpyrrolidone.

3. Composition selon l'une des revendications 1 **caractérisée par le fait que** ladite composition comprend :

   - de 1 à 90%, de préférence de 1 à 40% et plus préférentiellement encore de 5 à 20% en poids de matériau polymère,
   - de 1 à 40%, de préférence de 1 à 10% et plus préférenriellement encore de 2 à 4% en poids d'agent plastifiant et mcuillant,
   - de 0 à 98%, de préférence de 10 à 85%, et plus préférentiellement encore de 30 à 80% en poids de solvant.

4. Composition selon l'une quelconque des revendications 1 à 3, **caractérisée par le fait qu'**elle se présente sous forme de solution, dispersion, suspension, film ou pâte.

**5.** Composition selon l'une quelconque des revendications 1 à 4 **caractérisée par le fait qu'**elle se présente sous la forme d'un film comprenant au moins un matériau polymère et au moins un agent plastifiant et mouillant.

**6.** Procédé de collage à chaud de substrats, suivant lequel:

- on applique au moins sur une surface de l'un au moins des substrats à coller une couche de composition adhésive telle que définie à l'une quelconque des revendications 1 à 5,
- éventuellement, on applique au moins sur une couche de composition adhésive une couche de colle,
- on met en contact les surfaces des substrats à coller,
- on chauffe l'ensemble, éventuellement sous pression, à une température inférieure à la température de dégradation des substrats et inférieure à la température de fusion du matériau polymère de ladite composition adhésive,
- éventuellement, on refroidit.

**7.** Procédé de collage à chaud de substrats selon la revendication 6, **caractérisé par le fait que** l'on chauffe l'ensemble à une température inférieure à la température de déformation ces substrats et inférieure à la température de fusion du matériau polymère de la composition adhésive.

**8.** Procédé selon la revendication 6 ou 7, **caractérisé par le fait que** la température de chauffage est comprise entre 50 et 250°C, de préférence entre 70 et 240°C et plus préférentiellement encore entre 100 et 200°C, et la pression est comprise entre 0,07 et 0,3MPa, de préférence entre 0,10 et 0,3MPa, et plus préférentiellement encore entre 0,15 et 0,2MPa.

**9.** Procédé selon l'une des revendications 6 à 8, **caractérisé par le fait qu'**après application de la couche de composition adhésive on la sèche au moins partiellement à une température comprise entre 60 et 120°C.

**10.** Procédé selon l'une quelconque des revendications 6 à 9, **caractérisé par le fait que** le substrat peut être choisi parmi les substrats métalliques, tels qu'un substrat en alliage d'aluminium, les substrats polymères thermoplastiques ou thermodurcissables, éventuellement renforcés par des charges ou des fibres minérales ou organiques, de structure de type compact, mousse ou alvéolaire, ou les stratifiés comportant une ou plusieurs couches de matériaux métalliques, polymères thermoplastiques ou thermodurcissables, éventuellement renforcés par des charges ou des fibres minérales ou organiques, de structure de type compact, revêtement monolithique, alvéolaire ou nid d'abeille.

**11.** Procédé selon l'une quelconque des revendications 7 à 10 **caractérisé par le fait que** les substrats polymères sont en un matériau polymère qui est choisi parmi les polymères ou copolymères, éventuellement renforcés, ayant des motifs répétitifs identiques ou différents de formule générale:

$$- Ar-X-$$

dans laquelle:

Ar représente un radical aromatique mono ou polycyclique, substitué ou non substitué ;

et X représente un atome d'azote, d'oxygène ou de soufre ou une fonction OCO, O-CO-O, CO, NHCO, N($CO_2$), $SO_2$, N($SO_2$), C=NH ou un groupe alkyle saturé ou insaturé porteur d'un atome d'azote, d'oxygène ou de soufre ou d'une fonction OCO, O-CO-O, CO, NHCO, N($CO_2$), $SO_2$, O-$SO_2$, N($SO_2$), C=NH.

**12.** Procédé selon l'une quelconque des revendications 6 à 11, **caractérisé par le fait que** le substrat en matériau polymère est choisi parmi les résines thermodurcissables, éventuellement renforcées, à base d'époxydes modifiés ou non modifiés, de bismaléimides, de cyanate-esters, les résines thermoplastiques, éventuellement renforcées, à base de polysulfone, de sulfure de polyphénylène, de polyétheréthercétone, de polyéthersulfone, d'oxyde de polyarylènes, les sulfure de polyarylènes, les polyamides aromatique, de polyester aromatique, de polycarbonate aromatique, de polyétherimide et les composites de type résine phénolique ou polyamide renforcée par de l'aramide ou du verre ou du carbone.

**13.** Procédé selon l'une quelconque des revendications 6 à 12, **caractérisé par le fait que** préalablement à l'application de la couche de composition adhésive, les surfaces de substrats sont nettoyées et séchées.

14. Procédé selon l'une quelconque des revendications 6 à 13, **caractérisé par le fait que** la composition adhésive est appliquée au pinceau, par pulvérisation, après ajout éventuel de solvant, par trempage, ou par dépôt de film ou de pâte.

15. Procédé selon l'une quelconque des revendications 6 à 14 pour la réalisation de structure sandwich à âme en nid d'abeille de type feuilles d'aramide ou matrice polyétheréthercétone revêtue de polyétherimide, **caractérisé par le fait que** :

l'on applique sur les surfaces à coller de nid d'abeille et sur la surface du polyétherimide recouvrant le revêtement de polyétheréthercétone, une couche de composition adhésive telle que définie à l'une quelconque des revendications 1 à 5,
l'on met en contact les surfaces revêtues de composition adhésive,
l'on chauffe l'ensemble à une température comprise entre 70 et 240°C,
l'on refroidit à la température ambiante l'assemblage ainsi obtenu.

**Patentansprüche**

1. Klebstoffzusammensetzung zum Warmkleben von Substraten, die enthält:

   - mindestens ein Polymermaterial, das einen Schmelzpunkt besitzt,
   - mindestens einen Weichmacher mit Benetzungsvermögen, der eine aromatische Verbindung ist, die mindestens eine funktionelle Gruppe trägt, die ausgewählt ist unter Propiophenon, Benzophenon, Diphenylsulfon, Ditolylsulfon, Phenylbenzoat, Benzylbenzoat und Benzophenol,
   - und gegebenenfalls mindestens ein Lösungsmittel,

   **dadurch gekennzeichnet, dass** das Polymermaterial ausgewählt ist unter Polyetherimiden (PEI), Polyethersulfonen, Polysulfonen, Polyphenylensulfiden, Polyarylenoxiden, aromatischen Polyamiden, aromatischen Polyestem, aromatischen Polycarbonaten und Polyetheretherketonen (PEEK).

2. Zusammensetzung nach Anspruch 1, **dadurch gekennzeichnet, dass** das Lösungsmittel unter chlorierten Lösungsmitteln wie Dichlormethan und stickstoffhaltigen Lösungsmitteln wie N-Methylpyrrolidon ausgewählt ist.

3. Zusammensetzung nach Anspruch 1 oder 2, **dadurch gekennzeichnet, dass** sie enthält:

   - 1 bis 90 Gew.-%, vorzugsweise 1 bis 40 Gew.-% und noch bevorzugter 5 bis 20 Gew.-% Polymermaterial,
   - 1 bis 40 Gew.-%, vorzugsweise 1 bis 10 Gew.-% und noch bevorzugter 2 bis 4 Gew.-% Weichmacher mit Benetzungsvermögen,
   - 0 bis 98 Gew.-%, vorzugsweise 10 bis 85 Gew.-% und noch bevorzugter 30 bis 80 Gew.-% Lösungsmittel.

4. Zusammensetzung nach einem der Ansprüche 1 bis 3, **dadurch gekennzeichnet, dass** sie in Form einer Lösung, einer Dispersion, einer Suspension, eines Films oder einer Paste vorliegt.

5. Zusammensetzung nach einem der Ansprüche 1 bis 4, **dadurch gekennzeichnet, dass** sie in Form eines Films vorliegt, der mindestens ein Polymermaterial und mindestens einen Weichmacher mit Benetzungsvermögen enthält.

6. Verfahren zum Warmkleben von Substraten, das folgende Schritte umfasst:

   - Aufbringen einer Schicht einer Klebstoffzusammensetzung wie in einem der Ansprüche 1 bis 5 definiert auf mindestens eine Oberfläche mindestens eines der zu verklebenden Substrate,
   - gegebenenfalls Aufbringen einer Klebstoffschicht zumindest auf einer Schicht der Klebstoffzusammensetzung,
   - in Kontaktbringen der Oberflächen der zu verklebenden Substrate,
   - Erhitzen des Ganzen, gegebenenfalls unter Druck, auf eine Temperatur unterhalb der Abbautemperatur der Substrate und unterhalb der Schmelztemperatur des Polymermaterials der Klebstoffzusammensetzung,

- gegebenenfalls Abkühlen.

7. Verfahren zum Warmkleben von Substraten nach Anspruch 6, **dadurch gekennzeichnet, dass** das Ganze auf eine Temperatur unterhalb der Verformungstemperatur der Substrate und unterhalb der Schmelztemperatur des Polymermaterials der Klebstoffzusammensetzung erhitzt wird.

8. Verfahren nach Anspruch 6 oder 7, **dadurch gekennzeichnet, dass** die Temperatur beim Erhitzen zwischen 50 und 250 °C, vorzugsweise zwischen 70 und 240 °C und noch bevorzugter zwischen 100 und 200 °C und der Druck zwischen 0,07 und 0,3 MPa, vorzugsweise zwischen 0,10 und 0,3 MPa und noch bevorzugter zwischen 0,15 und 0,2 MPa liegen.

9. Verfahren nach einem der Ansprüche 6 bis 8, **dadurch gekennzeichnet, dass** die Schicht der Klebstoffzusammensetzung nach dem Aufbringen mindestens teilweise bei einer Temperatur zwischen 60 und 120 °C getrocknet wird.

10. Verfahren nach einem der Ansprüche 6 bis 9, **dadurch gekennzeichnet, dass** das Substrat ausgewählt werden kann unter metallischen Substraten, wie ein Substrat aus einer Aluminiumlegierung, Substraten aus thermoplastischen oder hitzehärtbaren Polymeren, die gegebenenfalls mit Füllstoffen oder anorganischen oder organischen Fasern verstärkt sind, mit einer kompakten Struktur, einer Schaumstruktur oder einer zelligen Struktur, oder Schichtstoffen, die eine oder mehrere Schichten aus metallischen Materialien, thermoplastischen oder hitzehärtbaren Polymeren aufweisen, die gegebenenfalls mit Füllstoffen oder anorganischen oder organischen Fasern verstärkt sind, mit einer kompakten Struktur, einer Struktur vom Typ einer monolithischen Beschichtung, einer zelligen Struktur oder einer Wabenstruktur.

11. Verfahren nach einem der Ansprüche 7 bis 10, **dadurch gekennzeichnet, dass** die polymeren Substrate aus einem Polymermaterial bestehen, das ausgewählt ist unter gegebenenfalls verstärkten Polymeren oder Copolymeren, die identische oder unterschiedliche wiederkehrende Einheiten der allgemeinen Formel

$$-Ar-X-,$$

aufweisen,
in der bedeuten:

Ar eine monocyclische oder polycyclische und gegebenenfalls substituierte aromatische Gruppe und
X ein Stickstoffatom, ein Sauerstoffatom oder ein Schwefelatom oder eine Funktion OCO, O-CO-O, CO, NHCO, $N(CO_2)$, $SO_2$, $N(SO_2)$, C=NH oder eine gesättigte oder ungesättigte Alkylgruppe, die ein Stickstoffatom, ein Sauerstoffatom oder ein Schwefelatom oder eine Funktion OCO, O-CO-O, CO, NHCO, $N(CO_2)$, $SO_2$, O-$SO_2$, $N(SO_2)$ oder C=NH trägt.

12. Verfahren nach einem der Ansprüche 6 bis 11, **dadurch gekennzeichnet, dass** das Substrat aus Polymermaterial ausgewählt ist unter
hitzehärtbaren und gegebenenfalls verstärkten hitzehärtbaren Harzen auf der Basis von modifizierten oder nicht modifizierten Epoxiden, Bismaleinimiden, Cyanatestern,
thermoplastischen und gegebenenfalls verstärkten Harzen auf der Basis von Polysulfonen, Polyphenylensulfiden, Polyetheretherketonen, Polyethersulfonen, Polyarylenoxiden, Polyarylensulfiden, aromatischen Polyamiden, aromatischen Polyestern, aromatischen Polycharbonaten, Polyetherimiden
und
Verbundmaterialien vom Phenolharztyp oder vom Polyamidtyp, die mit Aramid oder Glas oder Kohlenstoff verstärkt sind.

13. Verfahren nach einem der Ansprüche 6 bis 12, **dadurch gekennzeichnet, dass** die Oberflächen der Substrate vor dem Aufbringen der Schicht aus der Klebstoffzusammensetzung gereinigt und getrocknet werden.

14. Verfahren nach einem der Ansprüche 6 bis 13, **dadurch gekennzeichnet, dass** die Klebstoffzusammensetzung mit einem Pinsel, durch Spritzen, gegebenenfalls nach Lösungsmittelzusatz, durch Tränken oder Aufbringen eines Films oder einer Paste aufgebracht wird.

**15.** Verfahren nach einem der Ansprüche 6 bis 14 zur Herstellung einer Sandwichstruktur mit einer Innenlage mit Wabenstruktur vom Typ mit Aramidfolien oder vom Typ einer Polyetheretherketon-Matrix, die mit Polyetherimid beschichtet ist,

**gekennzeichnet durch**

Aufbringen einer Schicht einer Klebstoffzusammensetzung wie in einem der Ansprüche 1 bis 5 definiert auf die zu verklebenden Oberflächen der Wabenstruktur und auf die Oberfläche des Polyetherimids, mit dem die Beschichtung aus Polyetheretherketon überzogen ist,

Inkontaktbringen der mit der Klebstoffzusammensetzung beschichteten Oberflächen,

Erhitzen des Ganzen auf eine Temperatur zwischen 70 und 240 °C und

Abkühlen des so erhaltenen Verbunds auf Umgebungstemperatur.

**Claims**

**1.** An adhesive composition for hot bonding substrates, comprising:

- at least one polymer material having a melting point;
- at least one plasticising and wetting agent which is an aromatic compound having at least one functional group selected from the group comprising propiophenone, benzophenone, diphenyl sulphone, ditolyl sulphone, phenyl benzoate, benzyl benzoate and benzophenol;
- and where appropriate at least one solvent,

**characterised in that** the said polymer material is selected from the group comprising polyetherimides (PEI), polyethersulphones, polysulphones, polyphenylene sulphides, polyarylene oxides, aromatic polyamides, aromatic polyesters, aromatic polycarbonates and polyetheretherketones (PEEK).

**2.** A composition according to Claim 1, **characterised in that** the solvent is selected from chlorine-containing solvents such as dichloromethane and amine-containing solvents such as N-methyl pyrrolidone.

**3.** A composition according to either of Claims 1 or 2, **characterised in that** the said composition comprises:

- from 1 to 90%, preferably from 1 to 40% and particularly preferably from 5 to 20%, by weight of polymer material,
- from 1 to 40%, preferably from 1 to 10% and particularly preferably from 2 to 4%, by weight of plasticising and wetting agent,
- from 0 to 98%, preferably from 10 to 85% and particularly preferably from 30 to 80%, by weight of solvent.

**4.** A composition according to any one of Claims 1 to 3, **characterised in that** it is in the form of a solution, dispersion, suspension, film or paste.

**5.** A composition according to any one of Claims 1 to 4, **characterised in that** it is in the form of a film comprising at least one polymer material and at least one plasticising and wetting agent.

**6.** A method of hot bonding substrates, in accordance with which:

- a layer of adhesive composition as defined in any one of Claims 1 to 5 is applied to at least one surface of at least one of the substrates to be bonded,
- where appropriate a layer of glue is applied to at least one layer of adhesive composition,
- the surfaces of the substrates to be bonded are brought into contact,
- the whole system is heated, where appropriate under pressure, to a temperature lower than the temperature at which the substrates degrade and lower than the melting point of the polymer material of the said adhesive composition, and
- where appropriate the system is cooled.

**7.** A method of hot bonding substrates according to Claim 6, **characterised in that** the whole system is heated to a temperature lower than the softening point of the substrates and lower than the melting point of the polymer material of the adhesive composition.

**8.** A method according to Claim 6 or 7, **characterised in that** the temperature for heating is between 50 and 250°C, preferably between 70 and 240°C and particularly preferably between 100 and 200°C, and the pressure is between 0.07 and 0.3 MPa, preferably between 0.10 and 0.3 MPa and particularly preferably between 0.15 and 0.2 MPa.

9. A method according to one of Claims 6 to 8, **characterised in that** after the layer of adhesive composition has been applied it is at least partly dried at a temperature between 60 and 120°C.

10. A method according to any one of Claims 6 to 9, **characterised in that** the substrate may be selected from metal substrates, such as a substrate of aluminium alloy, thermoplastic or thermoset polymer substrates, where appropriate reinforced with mineral or organic fibres or fillers, having a structure of the compact, foamed or alveolar type, or laminate structures having one or more layers of metal materials, thermoplastic or thermoset polymers, where appropriate reinforced with mineral or organic fibres or fillers, having a structure of the compact, monolithic coating, alveolar or honeycomb type.

11. A method according to any one of Claims 7 to 10, **characterised in that** the polymer substrates are made of a polymer material which is selected from polymers or copolymers, where appropriate reinforced, having identical or different repeat units of the general formula:

$$- Ar-X-$$

in which:

Ar represents a substituted or unsubstituted monocyclic or polycyclic aromatic radical; and
X represents a nitrogen, oxygen or sulphur atom or an OCO, O-CO-O, CO, NHCO, N(CO$_2$), SO$_2$, N(SO$_2$) or C=NH group or a saturated or unsaturated alkyl group having a nitrogen, oxygen or sulphur atom or an OCO, O-CO-O, CO, NHCO, N(CO$_2$), SO$_2$, O-SO$_2$, N(SO$_2$) or C=NH group.

12. A method according to any one of Claims 6 to 11, **characterised in that** the substrate of polymer material is selected from thermoset resins, where appropriate reinforced, based on modified or unmodified epoxies, bismaleimides, cyanate esters, thermoplastic resins, where appropriate reinforced, based on polysulphone, polyphenylene sulphide, polyetheretherketone, polyethersulphone, polyarylene oxides, polyarylene sulphides, aromatic polyamides, aromatic polyester, aromatic polycarbonate, polyetherimide and composites of the phenolic or polyamide resin type reinforced by aramid or glass or carbon.

13. A method according to any one of Claims 6 to 12, **characterised in that** before the layer of adhesive composition is applied the surfaces of the substrates are cleaned and dried.

14. A method according to any one of Claims 6 to 13, **characterised in that** the adhesive composition is applied using a brush, by spraying, where appropriate after the addition of solvent, by dipping or by depositing a film or paste.

15. A method according to any one of Claims 6 to 14 to form a sandwich structure with a honeycomb core of the aramid leaf type or a matrix of polyetheretherketone coated with polyetherimide, **characterised in that**:

a layer of adhesive composition as defined in any one of Claims 1 to 5 is applied to the honeycomb surfaces to be bonded and to the surface of polyetherimide covering the coating of polyetheretherketone,
the surfaces coated with adhesive composition are brought into contact,
the whole system is heated to a temperature between 70 and 240°C, and
the assembly thus obtained is cooled to room temperature.

FIG.1.

FIG.2.

FIG.3.

FIG.4.

FIG.5.